# FASCICULE DE BREVET EUROPEEN

(11) **EP 1 543 502 B1**
(45) Date de publication et mention de la délivrance du brevet: **31.10.2007**
(21) Numéro de dépôt: 03773796.2
(22) Date de dépôt: 19.09.2003
(51) Int. Cl.: G10L 15/18, G10L 15/22

(54) **PROCEDE DE RECONNAISSANCE VOCALE AVEC CORRECTION AUTOMATIQUE**
VERFAHREN ZUR SPRACHERKENNUNG MIT AUTOMATISCHEN KORREKTUR
VOICE RECOGNITION METHOD WITH AUTOMATIC CORRECTION

(30) Priorité: 24.09.2002 FR 0211789
(43) Date de publication de la demande: 22.06.2005
(73) Titulaire: Thales, 92526 Neuilly Sur Seine (FR)
(72) Inventeur: POUSSIN, Gilles Thales Intellectual Property, F-94117 Arcueil Cedex (FR)
(74) Mandataire: Esselin, Sophie
(86) Numéro de dépôt international: PCT/FR2003/002770
(87) Numéro de publication internationale: WO 2004/029934

(56) Documents cités:
- EP-A- 0 877 518
- US-A- 6 141 661
- US-A1- 2002 035 471

## Description

La présente invention concerne un procédé de reconnaissance vocale avec correction automatique dans les systèmes de reconnaissance vocale à syntaxe contrainte, c'est-à-dire que les phrases reconnaissables se trouvent dans un ensemble de possibilités déterminées. Ce procédé est particulièrement adapté à la reconnaissance vocale en milieu bruité, par exemple dans les cockpits d'avions d'arme ou civil, dans les hélicoptères ou dans l'automobile.

De nombreux travaux dans le domaine de la reconnaissance vocale à syntaxe contrainte ont permis d'obtenir des taux de reconnaissance de l'ordre de 95%, et ce, même dans l'environnement bruité d'un cockpit d'avion d'arme (environ 100-110 dBA autour du casque du pilote). Cependant, cette performance n'est pas suffisante pour faire de la commande vocale un média de commande primaire pour des paramètres critiques du point de vue de la sécurité de vol.

Une stratégie utilisée consiste à soumettre les commandes critiques à une validation du pilote, qui vérifie par la phrase reconnue, que les bonnes valeurs vont être affectées aux bons paramètres (« feedback primaire »). En cas d'erreur du système de reconnaissance - ou erreur de prononciation du pilote - le pilote doit énoncer à nouveau toute la phrase, et la probabilité d'erreur sur la reconnaissance de la phrase à nouveau prononcée est la même. Ainsi par exemple, si le pilote énonce « Select altitude two five five zero feet », le système effectue les algorithmes de reconnaissance et donne un retour visuel au pilote. En envisageant le cas où une erreur se produit, le système va par exemple proposer « SEL ALT 2 5 9 0 FT ». Dans un système classique, le pilote doit alors prononcer de nouveau toute la phrase, avec les mêmes probabilités d'erreur.

Un système de correction d'erreur meilleur en terme de taux de reconnaissance consiste à faire prononcer au pilote une phrase de correction qui sera reconnue comme telle. Par exemple, si l'on reprend l'exemple précédent, le pilote pourra prononcer « Correction third digit five ». Cependant cette méthode augmente la charge de travail du pilote dans le procédé de reconnaissance, ce qui n'est pas souhaitable.

Le document US 6 141 661 montre ainsi la possibilité de répéter un mot en excluant la reconnaisance du premier candidat rejeté.

L'invention propose un procédé de reconnaissance vocale qui met en oeuvre une correction automatique de la phrase prononcée permettant d'obtenir un taux de reconnaissance proche de 100%, sans augmentation de la charge du pilote.

Pour cela, l'invention telle que définie dans la revendication 1 concerne un procédé de reconnaissance vocale d'un signal de parole prononcé par un locuteur avec correction automatique, comprenant notamment une étape de traitement dudit signal de parole délivrant un signal sous une forme compressée, une étape de reconnaissance de formes pour rechercher, à partir d'une syntaxe formée d'un ensemble de phrases qui représentent l'ensemble des chemins possibles entre un ensemble de mots préenregistré lors d'une phase préalable, une phrase de ladite syntaxe la plus proche dudit signal sous sa forme compressée, et caractérisé en ce qu'il comprend
- la mémorisation (16) du signal sous sa forme compressée,
- la génération (17) d'une nouvelle syntaxe (SYNT2) dans laquelle le chemin correspondant à ladite phrase déterminée lors de l'étape de reconnaissance antérieure est interdit,
- la réitération de l'étape de reconnaissance de formes pour rechercher, à partir de la nouvelle syntaxe, une autre phrase la plus proche dudit signal mémorisé.

D'autres avantages et caractéristiques apparaîtront plus clairement à la lecture de la description qui suit, illustrée par les figures annexées qui représentent :
- la figure 1, le schéma de principe d'un système de reconnaissance vocale de type connu;
- la figure 2, le schéma d'un système de reconnaissance vocale du type de celui de la figure 1 mettant en oeuvre le procédé selon l'invention ;
- la figure 3, un schéma illustrant la modification de la syntaxe dans le procédé selon l'invention.

Sur ces figures, les éléments identiques sont référencés par les mêmes repères.

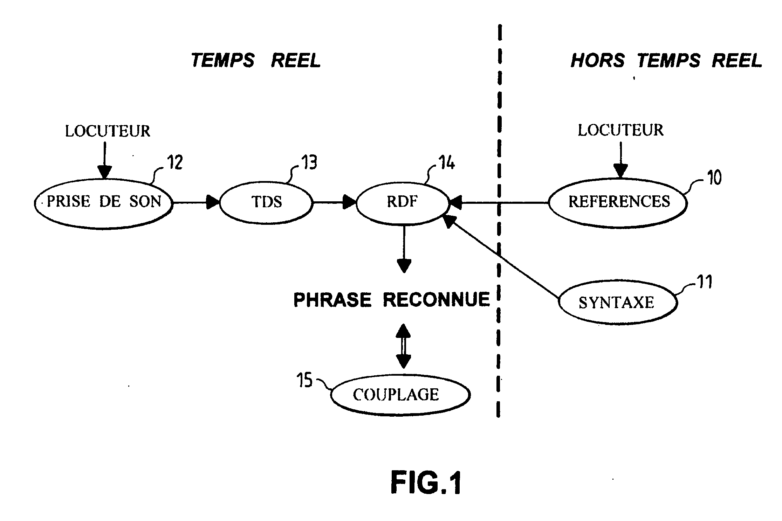

La figure 1 présente le schéma de principe d'un système de reconnaissance vocale à syntaxe contrainte de type connu, par exemple un système embarqué dans un environnement fortement bruité. Dans un système à syntaxe contrainte mono locuteur, une phase d'apprentissage hors temps réel permet à un locuteur donné d'enregistrer un ensemble de références acoustiques (mots) stockés dans un espace de références 10. La syntaxe 11 est formée d'un ensemble de phrases qui représentent l'ensemble des chemins ou transitions possibles entre les différents mots. Typiquement, quelques 300 mots sont enregistrés dans l'espace de référence qui forment typiquement 400 000 phrases possibles de la syntaxe.

Classiquement, un système de reconnaissance vocale comporte au moins trois blocs comme illustré sur la figure 1. Il comporte un bloc 12 d'acquisition du signal de parole (ou prise de son), un bloc 13 de traitement du signal et un bloc 14 de reconnaissance de formes. Une description détaillée de l'ensemble de ces blocs selon un mode de réalisation se trouve par exemple dans la demande de brevet français FR 2 808 917 au nom de la déposante.

De façon connue, le signal acoustique traité par le bloc de prise de son 12 est un signal de parole capté par un transducteur électroacoustique. Ce signal est numérisé par échantillonnage et découpé en un certain nombre de trames recouvrantes ou non, de même durée ou non. Dans le bloc 13 de traitement du signal, on associe classiquement chaque trame à un vecteur de paramètres qui traduit l'information acoustique contenue dans la trame. Il y a plusieurs méthodes pour déterminer un vecteur de paramètres. Un exemple classique de méthode est celle qui utilise les coefficients cepstraux de type MFCC (abréviation de l'expression anglo-saxonne « Mel Frequency Cepstral Coefficient »). Le bloc 13 permet de déterminer dans un premier temps l'énergie spectrale de chaque trame dans un certain nombre de canaux fréquentiels ou fenêtres. Il délivre pour chacune des trames une valeur d'énergie spectrale ou coefficient spectral par canal fréquentiel. II effectue ensuite une compression des coefficients spectraux obtenus pour tenir compte du comportement du système auditif humain. Il effectue enfin une transformation des coefficients spectraux compressés, ces coefficients spectraux compressés transformés sont les paramètres du vecteur de paramètres recherché.

Le bloc 14 de reconnaissance de formes est relié à l'espace de références 10. Il compare la série des vecteurs de paramètres issue du bloc de traitement du signal aux références obtenues lors de la phase d'apprentissage, ces références traduisant les empreintes acoustiques de chaque mot, chaque phonème, plus généralement de chaque commande et que l'on appellera de façon générique « phrase » dans la suite de la description. Puisque la reconnaissance de formes s'effectue par comparaison entre vecteurs de paramètres, on doit avoir à disposition ces vecteurs de paramètres de base. On les obtient de la même manière que pour les trames de signal utile, en calculant pour chaque trame de base son énergie spectrale dans un certain nombre de canaux fréquentiels et en utilisant des fenêtres de pondération identiques.

A l'issue de la dernière trame, ce qui correspond généralement à la fin d'une commande, la comparaison donne soit une distance entre la commande testée et des commandes de référence, la commande de référence présentant la distance la plus faible est reconnue, soit une probabilité pour que la série des vecteurs de paramètres appartiennent à une suite de phonèmes. Les algorithmes classiquement utilisés pendant la phase de reconnaissance de formes sont dans le premier cas de type DTW (abréviation de l'expression anglo-saxonne pour Dynamic Time Warping) ou, dans le second cas de type HMM (abréviation de l'expression anglo-saxonne Hidden Markov Models). Dans le cas d'un algorithme de type HMM, les références sont des fonctions gaussiennes associées chacune à un phonème et non à des séries de vecteurs de paramètres. Ces fonctions gaussiennes sont caractérisées par leur centre et leur écart-type. Ce centre et cet écart type dépendent des paramètres de toutes les trames du phonème, c'est à dire des coefficients spectraux compressés de toutes les trames du phonème.

Les signaux numériques représentant une phase reconnue sont transmis à un dispositif 15 qui réalise le couplage avec l'environnement, par exemple par affichage de la phrase reconnue sur le viseur tête haute d'un cockpit d'avion.

Comme cela a été précédemment expliqué, pour les commandes critiques, le pilote peut avoir à sa disposition un bouton de validation permettant l'exécution de la commande. Dans le cas où la phrase reconnue serait erronée, il doit généralement répéter la phrase avec une probabilité identique d'erreur.

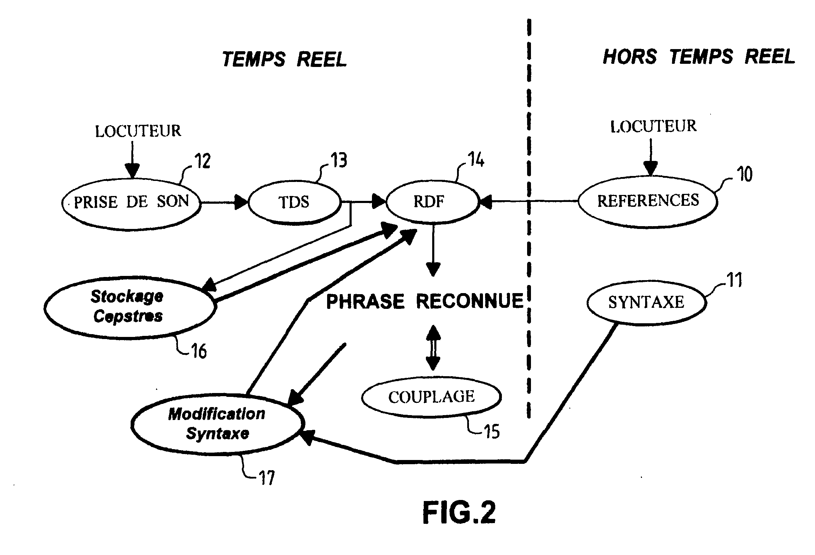

Le procédé selon l'invention permet une correction automatique de grande efficacité et simple à mettre en oeuvre. Son implantation dans un système de reconnaissance vocale du type de la figure 1 est schématisée sur la figure 2.

Selon l'invention, à l'issu de la phase de traitement du signal 13, on mémorise (étape 16) le signal de parole sous sa forme compressée (ensemble des vecteurs de paramètres également appelés « cepstres »). Dès qu'une phrase est reconnue, on génère une nouvelle syntaxe (étape 17) dans laquelle la phrase reconnue n'est plus un chemin possible de la syntaxe. On réitère alors la phase de reconnaissance de formes avec le signal mémorisé mais sur la nouvelle syntaxe. Préférentiellement, la reconnaissance de formes est réitérée de manière systématique pour préparer une autre solution possible. Si le pilote détecte une erreur dans la commande reconnue, il appuie par exemple sur un bouton spécifique de correction, ou exerce un appui court ou un double clic sur l'alternat de commande vocale et le système lui propose la nouvelle solution trouvée lors de la réitération de la reconnaissance de formes. On réitère les étapes précédentes pour générer de nouvelles syntaxes qui interdisent toutes les solutions précédemment trouvées. Quand le pilote voit la solution qui correspond réellement à la phrase énoncée, il valide par un moyen quelconque (bouton, voix, etc.).

Reprenons l'exemple cité précédemment en tirant bénéfice de l'invention. Le pilote énonce selon cet exemple « Select altitude two five five zero feet ». Le système effectue les algorithmes de reconnaissance et, par exemple à cause du bruit ambiant, reconnaît « Select altitude two five nine zero feet ». Un feedback visuel est donné au pilote : « SEL ALT 2 5 9 0 FT ». Alors que le locuteur est en train de lire la phrase reconnue, le système anticipe une éventuelle erreur en générant de façon automatique une nouvelle syntaxe dans laquelle la phrase reconnue est supprimée et en réitérant l'étape de reconnaissance de formes.

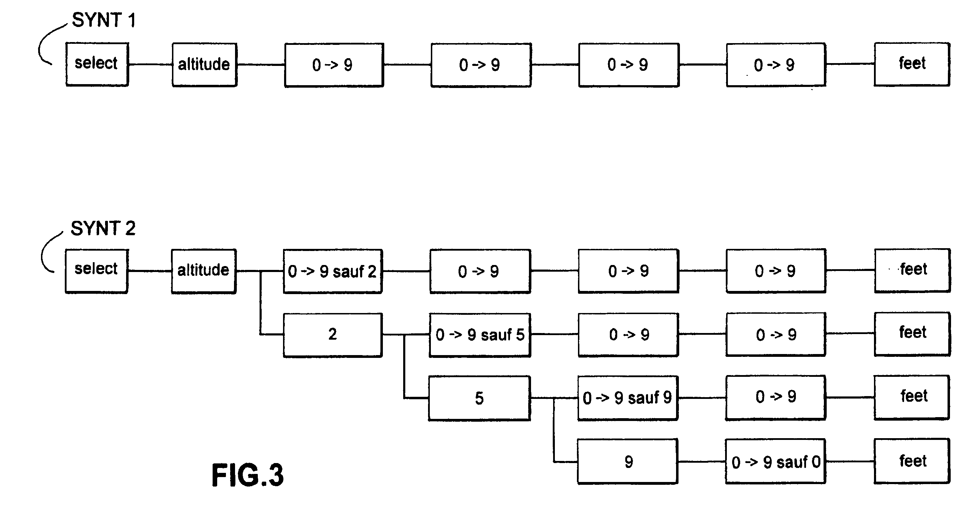

La figure 3 illustre par un schéma simple, dans le cas de l'exemple précédent, la modification de la syntaxe permettant avec un algorithme de reconnaissance de formes de type DTW la recherche d'une nouvelle phrase. La phrase énoncée par le locuteur selon l'exemple précédente est « SEL ALT 2 5 5 0 FT ». Nous supposons que la phrase reconnue par la première phase de reconnaissance de formes est « SEL ALT 2 5 9 0 FT ». Cette première phase fait appelle à la syntaxe d'origine SYNT1, dans laquelle toutes les combinaisons (ou chemins) sont possibles pour les quatre chiffres à reconnaître. Lors d'une deuxième phase de reconnaissance de formes, la phrase reconnue est écartée des combinaisons possibles, modifiant ainsi l'arbre syntaxique comme cela est illustré sur la figure 3. Une nouvelle syntaxe est générée qui interdit le chemin correspondant à la solution reconnue. Une deuxième phase est alors reconnue. La phase de reconnaissance de formes peut être réitérée avec, à chaque fois, génération d'une nouvelle syntaxe qui reprend la syntaxe précédente mais dans laquelle est supprimée la phrase précédemment trouvée.

Ainsi, la nouvelle syntaxe est obtenue par réorganisation de la syntaxe antérieure de telle sorte à particulariser le chemin correspondant à la phrase déterminée lors de l'étape de reconnaissance antérieure, puis en éliminant ce chemin. Cette réorganisation est faite par exemple en parcourant la syntaxe antérieure en fonction des mots de la phrase prélablement reconnue et en formant au fil de ce parcours le chemin spécifique à cette phrase.

Dans un mode de fonctionnement possible, le pilote indique au système qu'il désire une correction (par exemple par un appui court de l'alternat commande vocale) et dès qu'une nouvelle solution est disponible, elle est affichée. La recherche automatique d'une nouvelle phrase s'arrête par exemple lorsqu'une phrase reconnue est validée par le pilote. Dans notre exemple, il est probable que dès la deuxième phase de reconnaissance de formes, le pilote voit « SEL ALT 2 5 5 0 FT ». Il peut alors valider la commande. Dans la mesure où de nombreuses erreurs de reconnaissance sont dues à des confusions entre des mots proches (par exemple, five-nine), l'invention permet de corriger presque à coup sûr ces erreurs avec un minimum de charge de travail supplémentaire pour le pilote et de façon très rapide du fait de l'anticipation sur la correction que peut effectuer le procédé selon l'invention.

En outre, en générant une nouvelle syntaxe et en réitérant l'étape de reconnaissance de formes sur la nouvelle syntaxe, on n'accroît pas la complexité de l'arbre syntaxique. L'algorithme de traitement peut donc effectuer la reconnaissance avec un délai similaire à chaque itération, ce délai étant imperceptible pour le pilote du fait de l'anticipation de la correction.

## Revendications

1. Procédé de reconnaissance vocale d'un signal de parole prononcé par un locuteur avec correction automatique, comprenant notamment une étape (13) de traitement dudit signal de parole délivrant un signal sous une forme compressée, une étape (14) de reconnaissance de formes pour rechercher, à partir d'une syntaxe (SYNT1) formée d'un ensemble de phrases qui représentent l'ensemble des chemins possibles entre un ensemble de mots préenregistré lors d'une phase préalable, une phrase de ladite syntaxe la plus proche dudit signal sous sa forme compressée, et **caractérisé en ce qu'**il comprend
- la mémorisation (16) du signal sous sa forme compressée,
- la génération (17) d'une nouvelle syntaxe (SYNT2) dans laquelle le chemin correspondant à ladite phrase déterminée lors de l'étape de reconnaissance antérieure est interdit, la nouvelle syntaxe étant obtenue par réorganisation de la syntaxe antérieure de telle sorte à particulariser ledit chemin correspondant à la phrase déterminée lors de l'étape de reconnaissance antérieure, puis élimination de ce chemin.
- la réitération de l'étape de reconnaissance de formes pour rechercher, à partir de la nouvelle syntaxe, une autre phrase la plus proche dudit signal mémorisé.

2. Procédé de reconnaissance vocale selon la revendication 1, dans lequel ladite réorganisation est faite en parcourant la syntaxe antérieure en fonction des mots de ladite phrase et formation au fil de ce parcours du chemin spécifique à ladite phrase.

3. Procédé de reconnaissance vocale selon l'une des revendications précédentes, **caractérisé en ce que** la recherche d'une nouvelle phrase est réitérée de façon systématique pour anticiper la correction.

4. Procédé de reconnaissance vocale selon la revendication 3, **caractérisé en ce que** chaque nouvelle phrase reconnue est proposée au locuteur sur sa demande.

5. Procédé de reconnaissance vocale selon l'une des revendications 3 ou 4, **caractérisé en ce que** la recherche d'une nouvelle phrase est stoppée par validation d'une phrase reconnue par le locuteur.

6. Procédé de reconnaissance vocale selon l'une des revendications précédentes, **caractérisé en ce que** l'étape (13) de traitement comprend :
- une étape de numérisation et de découpage en une suite de trames temporelles dudit signal acoustique,
- une phase de paramétrisation de trames temporelles contenant de la parole de manière à obtenir, par trame, un vecteur de paramètres dans le domaine fréquentiel, l'ensemble de ces vecteurs de paramètres formant ledit signal sous sa forme compressée.

7. Procédé de reconnaissance vocale selon la revendication 6, **caractérisé en ce que** la reconnaissance de forme fait appel à un algorithme de type DTW.

8. Procédé de reconnaissance vocale selon la revendication 6, **caractérisé en ce que** la reconnaissance de forme fait appel à un algorithme de type HMM.

## Claims

1. Method of voice recognition of a speech signal uttered by a speaker with automatic correction, comprising in particular a step (13) of processing said speech signal delivering a signal in a compressed form, a step (14) of recognizing patterns so as to search, on the basis of a syntax (SYNT1) formed of a set of phrases which represent the set of possible paths between a set of words prerecorded during a prior phase, for a phrase of said syntax that is the closest to said signal in its compressed form, and **characterized in that** it comprises
- the storage (16) of the signal in its compressed form,
- the generation (17) of a new syntax (SYNT2) in which the path corresponding to said phrase determined during the earlier recognition step is precluded, the new syntax being obtained by reorganizing the earlier syntax in such a way as to particularize said path corresponding to the phrase determined during the earlier recognition step, then eliminating this path,
- the repetition of the step of recognizing patterns so as to search, on the basis of the new syntax, for another phrase that is the closest to said stored signal.

2. Method of voice recognition according to Claim 1, in which said reorganization is effected by traversing the earlier syntax as a function of the words of said phrase and formation in the course of this traversal of the path specific to said phrase.

3. Method of voice recognition according to either of the preceding claims, **characterized in that** the search for a new phrase is repeated systematically to anticipate the correction.

4. Method of voice recognition according to Claim 3, **characterized in that** each new phrase recognized is proposed to the speaker on the request thereof.

5. Method of voice recognition according to either of Claims 3 and 4, **characterized in that** the search for a new phrase is halted by validation of a phrase recognized by the speaker.

6. Method of voice recognition according to one of the preceding claims, **characterized in that** the processing step (13) comprises:
- a step of digitizing and of chopping into a string of time frames of said acoustic signal,
- a phase of parameterization of time frames containing the speech so as to obtain, per frame, a vector of parameters in the frequency domain, the whole set of these parameter vectors forming said signal in its compressed form.

7. Method of voice recognition according to Claim 6, **characterized in that** the pattern recognition calls upon an algorithm of DTW type.

8. Method of voice recognition according to Claim 6, **characterized in that** the pattern recognition calls upon an algorithm of HMM type.

## Patentansprüche

1. Verfahren zur Spracherkennung eines von einem Sprecher ausgesprochenen Sprachsignals mit automatischer Korrektur, das insbesondere einen Schritt (13) der Verarbeitung des Sprachsignals, der ein Signal in komprimierter Form liefert, und einen Schritt (14) der Formerkennung aufweist, um ausgehend von einer Syntax (SYNT1), die von einer Einheit von Sätzen gebildet wird, die die Gesamtheit der möglichen Wege zwischen einer Einheit von bei einem vorhergehenden Satz voreingespeicherten Wörtern darstellen, einen Satz der Syntax zu suchen, der dem Signal in seiner komprimierten Form am nächsten ist, **dadurch gekennzeichnet, dass** es aufweist
- die Speicherung (16) des Signals in seiner komprimierten Form,
- die Erzeugung (17) einer neuen Syntax (SYNT2), in der Weg, der dem im vorherigen Erkennungsschritt bestimmten Satz entspricht, verboten ist, wobei die neue Syntax durch eine derartige Umorganisierung der vorherigen Syntax erhalten wird, dass der dem im vorherigen Erkennungsschritt bestimmten Satz entsprechende Weg differenziert wird, und dann Löschen dieses Wegs,
- die Wiederholung des Formerkennungsschritts, um ausgehend von der neuen Syntax einen anderen Satz zu suchen, der dem gespeicherten Signal am nächsten ist.

2. Spracherkennungsverfahren nach Anspruch 1, bei dem die Umorganisierung mittels Durchlauf der vorherigen Syntax in Abhängigkeit von den Wörtern des Satzes und Bildung während dieses Durchlaufs des für diesen Satz spezifischen Wegs erfolgt.

3. Spracherkennungsverfahren nach einem der vorhergehenden Ansprüche, **dadurch gekennzeichnet, dass** die Suche nach einem neuen Satz systematisch wiederholt wird, um der Korrektur vorzugreifen.

4. Spracherkennungsverfahren nach Anspruch 3, **dadurch gekennzeichnet, dass** jeder neue erkannte Satz dem Sprecher auf seine Anfrage vorgeschlagen wird.

5. Spracherkennungsverfahren nach einem der Ansprüche 3 oder 4, **dadurch gekennzeichnet, dass** die Suche nach einem neuen Satz durch Validierung eines vom Sprecher erkannten Satzes beendet wird.

6. Spracherkennungsverfahren nach einem der vorhergehenden Ansprüche, **dadurch gekennzeichnet, dass** der Verarbeitungsschritt (13) aufweist:
- einen Schritt der Digitalisierung und des Zerschneidens in eine Folge von Zeitrahmen des akustischen Signals,
- eine Phase der Parametrisierung von Sprache enthaltenden Zeitrahmen, um pro Rahmen einen Parametervektor im Frequenzbereich zu erhalten, wobei die Gesamtheit dieser Parametervektoren das Signal in seiner komprimierten Form bildet.

7. Spracherkennungsverfahren nach Anspruch 6, **dadurch gekennzeichnet, dass** die Formerkennung einen Algorithmus vom Typ DTW verwendet.

8. Spracherkennungsverfahren nach Anspruch 6, **dadurch gekennzeichnet, dass** die Formerkennung einen Algorithmus vom Typ HMM verwendet.
